# EUROPÄISCHE PATENTSCHRIFT

(11) **EP 0 900 341 B1**
(45) Veröffentlichungstag und Bekanntmachung des Hinweises auf die Patenterteilung: **03.11.2004**
(21) Anmeldenummer: 98909448.7
(22) Anmeldetag: 12.02.1998
(51) Int. Cl.: F16D 23/00, F16D 11/14

(54) **MORPHOLOGIE-MATRIX EINER KURZVERZAHNUNG**
MORPHOLOGY MATRIX FOR SHORT GEARING
MATRICE DE MORPHOLOGIE D'UNE DENTURE BASSE

(30) Priorität: 21.03.1997 DE 19711971
(43) Veröffentlichungstag der Anmeldung: 10.03.1999
(73) Patentinhaber: BLW PRÄZISIONSSCHMIEDE GmbH, 80807 München (DE)
(72) Erfinder: GUTMANN, Peter, D-81927 München (DE); TAUSCHEK, Georg, D-81825 München (DE); WEISSMANN, Gerd, D-85464 Neufinsing (DE)
(74) Vertreter: Grättinger & Partner (GbR)
(86) Internationale Anmeldenummer: PCT/EP1998/000777
(87) Internationale Veröffentlichungsnummer: WO 1998/042995

(56) Entgegenhaltungen:
- EP-A- 0 195 706
- WO-A-94/21935
- DE-B- 1 130 651
- DE-C- 700 712
- DE-C- 738 515
- GB-A- 404 567
- US-A- 2 718 176
- US-A- 4 905 806
- US-A- 5 524 738
- SOVIET INVENTIONS ILLUSTRATED Section PQ, Week 8619 23.Mai 1986 Derwent Publications Ltd., London, GB; Class Q63, AN 86-123601 XP002068606 & SU 1 183 751 A (AS MOLD APPL PHYS) , 7.Oktober 1985

## Beschreibung

Zahn-Querschnittsform eines Zahnes einer Kurzverzahnung, an Zahnrädern in Schaltgetrieben von Kraftfahrzeugen, wobei die Zähne der Kurzverzahnung an einem zylindrischen Abschnitt eines Gangrads oder einer Schaltmuffe ausgebildet sind, dessen Achse mit der Verschiebeachse der Schaltmuffe zusammenfällt, und wobei jeder Zahn unter Ausbildung einer Dachfläche einen abgeschrägten Zahnkopf und zur Zahnbasis hin wenigstens über eine Teilhöhe hinterstellt ausgebildete Seitenflanken aufweist, die mit einer Zahnbasisausrundung enden.

Derartige Kurzverzahnungen sind in der einschlägigen Literatur vielfach beschrieben und in der Praxis verwirklicht. Beispielhaft wird verwiesen auf GB 404567.

Bei Kurzverzahnungen kommt es darauf an, daß der Schaltvorgang zwischen zwei bereits synchron drehenden Gangrädern möglichst reibungslos, d.h. leichtgängig erfolgt. Insbesondere soll möglichst selten und nur während äußerst kurzer Phasen ein frontales Zusammentreffen der Zahnköpfe zweier Kurzverzahnungen auftreten. Ein derartiger Schaltkomfort kann jedoch nicht auf Kosten des axialen Zusammenschlusses und damit des sicheren axialen Halts der gewählten Schaltverbindung gehen. Hierzu dient insbesondere eine Gestaltung der Zahnseitenflanken mit Hinterschnitt, derart, daß sich der Zahn wenigstens über eine Teilhöhe seiner Seitenflanken in Richtung Zahnbasis verjüngt. Eine derartige zueinander korrespondierende Ausbildung zweier zusammenwirkender Kurzverzahnungen bewirkt, daß die aneinanderliegenden hinterschnittenen Seitenflanken gegen axiales Auseinandergleiten und damit unerwünschtes Lösen der Schaltverbindung gesichert sind.

Dem Fachmann ist zwar geläufig, daß im Rahmen einer üblichen Ausbildung einer derartigen Kurzverzahnung die einzelnen Zähne über ihre gesamte Höhe an einem zylindrischen Abschnitt gebunden sind und auch eine Basisanbindung aufweisen können; ihm ist ferner geläufig, daß durch eine Zahnbasisausrundung die Belastbarkeit der Zähne verbessert werden kann und daß durch eine dachförmige Ausbildung des Zahnkopfs der Schalteingriff erleichtert werden kann.

Da es jedoch für eine Kurzverzahnung zahlreiche verschiedene Einsatzmöglichkeiten gibt, wobei unterschiedliche Belastungen und Belastungswechsel vorkommen können, da an den Schaltkomfort und die Schaltsicherheit in der Praxis spezifische Anforderungen gestellt werden, wobei auch noch eine Reihe umformtechnisch bedingte Kriterien zu berücksichtigen sind, ist davon auszugehen, daß insgesamt eine erwünschte Orientierung für den Fachmann nicht mehr gegeben ist.

Demzufolge besteht eine Zielsetzung gemäß der vorliegenden Erfindung darin, einen Überblick über Auslegungs- und Designkriterien von Kurzverzahnungen zu schaffen, d.h. dem Fachmann ein Mittel an die Hand zu geben, welches ihm ermöglicht, den jeweiligen Anforderungen entsprechende Lösungen leicht und zielsicher aufzufinden.

Der erfindungsgemäße Lösungsvorschlag begnügt sich bewußt nicht mit einem singulären Lösungsgedanken, sondern schafft eine abstrahierte Regel für die Ausbildung der Querschnittsform der Zähne einer Kurzverzahnung.

Dementsprechend ist die erfindungsgemäße Zahn-Querschnittsform dadurch gekennzeichnet, daß alle Zähne oder eine nach einem regelmäßig wechselnden Muster definierte Teilmenge derselben wenigstens eine der beiden folgenden, die Gestaltung der Seitenflanken definierenden Morphologien umfaßt:
a) zwischen der Unterkante der Dachfläche des Zahnkopfs und dem hinterstellten Flankenabschnitt ist eine obere Geradverzahnung in Form einer zur Zahnlängsrichtung im wesentlichen parallel verlaufenden Leitfläche mit einer der jeweiligen Belastung der Zahnflanke entsprechenden Breite vorgesehen;
b) zwischen dem hinterstellten Flankenabschnitt und der Zahnbasisausrundung ist eine untere Geradverzahnung in Form einer zur Zahnrichtung im wesentlichen parallel verlaufender Stützfläche mit einer der jeweiligen Belastung der Zahnbasis entsprechenden Höhe vorgesehen.

Diesem Lösungsvorschlag liegt die Überlegung zugrunde, daß zusätzlich zu dem hinterstellten Flankenabschnitt je nach Einsatzfall eine oder zwei Geradverzahnungen verwirklicht sind im Sinne weiterer Abschnitte jeder Seitenflanke, nämlich entweder eine obere Geradeverzahnung oberhalb des hinterstellten Flankenabschnitts und/oder eine untere Geradverzahnung unterhalb des hinterstellten Flankenabschnitts.

Durch die obere Geradverzahnung wird eine Leitfläche geschaffen, in der Fachsprache auch "Flat" bezeichnet, welche in der Einspurphase der Zähne wirksam ist und im anfänglichen Eingriffsbereich deren seitlich am weitesten vorspringenden Flankenbereich verstärkt, was sich entsprechend vorteilhaft auf die Lebensdauer der Verzahnung auswirkt. Durch die Leitflächen wird das sog. "Backlash" verringert, d.h. es werden die Reaktionskräfte der Schaltbewegeung herabgesetzt, ohne daß das Flankenspiel vergrößert wird.

Die Leitflächen können, in Zahnlängsrichtung gesehen, schmal oder breit ausgebildet sein. Dadurch ergibt sich ein erheblicher Einfluß auf die Größe des Hinterstellungswinkels, in dem Sinne, daß eine breite Leitfläche zu einem größeren, also wirksameren Hinterstellungswinkel führt als eine schmale Leitfläche. Gleichzeitig ist die Breite der Leitfläche aber auch als Funktion der Belastung, also der auftretenden Drehmomente zu sehen.

Die erfindungsgemäße Lehre begnügt sich nicht bloß mit einer oberen Geradverzahnung. Zusätzlich oder an deren Stelle kann eine untere Geradverzahnung treten, welche sich unterhalb des hinterstellten Flankenabschnitts befindet. Die untere Geradverzahnung bildet eine Zahnbasisverstärkung in Form einer zur Zahnlängsachse verlaufenden parallelen Stützfläche, welche der Zahnverjüngung durch den hinterstellten Flankenabschnitt entgegenwirkt. Eine derartige Stützfläche wirkt sich also unmittelbar festigkeitserhöhend auf den gesamten Zahn, insbesondere dessen basisnahen Bereich aus.

Bei besonders hohen Drehmomentbelastungen wird der Fachmann im Rahmen der erfindungsgemäß vorgeschlagenen Morphologie die obere und die untere Geradverzahnung im Sinne einer Ausbildung von Leitflächen und Stützflächen miteinander kombinieren.

Die Stützfläche jeder Zahnflanke kann niedrig oder hoch ausgebildet sein. Auch hier wird der Fachmann seine Wahl im wesentlichen davon abhängig machen, welchen Hinterstellungswinkel er verwirklichen möchte.

Ist nur eine obere Geradverzahnung - mit schmaler oder breiter Leitfläche - vorgesehen, so beträgt der Hinterstellungswinkel vorteilhaft bis zu 9 Winkelgraden gemäß der Beziehung 0 ≤ α ≤ 9.

Bei einer unteren Geradverzahnung mit niedriger Stützfläche, unabhängig davon, ob auch noch eine obere Geradverzahnung vorgesehen ist, beträgt der Hinterstellungswinkel zweckmäßig zwischen 3 und 12 Winkelgraden nach der Beziehung 3 ≤ α ≤ 12.

Ist eine untere Geradverzahnung - mit oder ohne obere Geradverzahnung - mit hoher Sitzfläche vorgesehen, so beträgt der Hinterstellungswinkel zwischen 6 und 60 Winkelgrade nach der Beziehung 6 ≤ α ≤ 60. Größte Hinterstellungswinkel werden dadurch verwirklicht, daß eine obere Geradverzahnung in Form einer breiten Leitfläche und eine untere Geradverzahnung in Form einer hohen Stützfläche gewählt werden.

Die in den Ansprüchen 7 und 8 enthaltenen Bemessungsregeln für die Dimensionierung der Leitfläche bzw. der Stützfläche lassen sich aufgrund der Gesamtgeometrie ableiten und setzen voraus, daß Zähne mit gleicher Gesamtzahnhöhe bzw. Zahnkopfhöhe miteinander verglichen werden. Die Zahnhöhe unterhalb des Zahnkopfs bis zur Zahnbasis ist letztlich die Summe aus Leitfläche, hinterstelltem Flankenabschnitt und Stützfläche, wobei sich nach unten stets eine Zahnbasisausrundung anschließt, die bei Vorhandensein einer Stützfläche mit einem kleineren Radius auskommen kann als dies für Ausführungsformen ohne Stützfläche gilt.

Was die Ausbildung des dachförmigen Zahnkopfs betrifft, so ist davon auszugehen, daß die vorgesehenen Dachformen aus an sich bekannten Formelementen bestehen, nämlich aus Geraden oder konvex ausgewölbten Dachflächen.

Die gerade Dachfläche ist dauerhaft. Der großen Reibfläche wegen ist ihre Gegenkraft beim Einspurvorgang jedoch relativ hoch.

Für die konvexe Dachfläche spricht als Folge der Linienberührung die geringere Reibungskraft, welche dementsprechend eine Erhöhung des Schaltkomforts ermöglicht.

Für Rücklaufräder, also in zwei Richtungen drehende Gangräder, kommen nur symmetrische Dachflächen in Frage. Für den Normalfall eines nur in einer Richtung drehenden Gangrads eignet sich besonders gut die asymmetrische Dachform, bei welcher mit größeren Gegenkräften während des Einspurvorgangs nur für eine kurze Schaltphase zu rechnen ist. Je mehr sich die Dachform einem Pultdach nähert, desto kürzer ist eine ggfs. auftretende Einschaltblockierung.

Von den beiden Dachflächen eines Zahnkopfs sind entweder beide als ebene Fläche oder als konvexe Fläche ausgebildet oder eine ist als ebene Fläche, die andere als konvexe Fläche ausgebildet. Die durch konvexe Dachflächen erzielte Einspurerleichterung läßt sich bei Gangrädern mit nur einer Drehrichtung noch dadurch steigern, daß eine der Dachflächen als ebene, im wesentlichen parallel zur Zahnlängsrichtung verlaufende Fläche ausgebildet ist und daß die andere Dachfläche entsprechend schräg verläuft und zusammen mit der ersten Dachfläche eine Dachform in Art eines Pultdachs bildet.

Im folgenden wird die Erfindung anhand einer Zeichnung, welche eine Bildermatrix darstellt, erläutert.

Die Matrix besitzt neun vollständig ausgefüllte Spalten und fünf vollständig ausgefüllte Zeilen. Die Spalten werden mit 1 bis 9 durchnumeriert, die Zeilen mit a bis e bezeichnet. Damit läßt sich jede dargestellte Zahnform, soweit nötig, gezielt ansprechen.

In Zeile a sind zwei dem Stand der Technik zuzuordnende Zahnformen dargestellt, nämlich in der mit 0 bezeichneten Spalte ein nicht bis zur Basis 1 erstreckter Zahn Za0. Er weist eine symmetrische Dachform mit ebener Dachfläche 2 (Dachform D2,2) auf; außerdem besitzt er hinterstellte Seitenflanken 3, die mit Entfernung zur Zahnbasis 1 enden, so daß zwischen Zahn Za0 und der Zahnbasis 1 ein Freilauf für ein Werkzeug zum spanabhebenden Fertigen der hinterstellten Seitenflanken, z.b. durch Hinterstoßen gebildet ist.

Zahn Za1 zeigt eine Querschnittsform eines Zahnes einer Kurzverzahnung, welche dem Oberbegriff von Anspruch 1 entspricht, also wie Zahn Za0 dem Stand der Technik zuzurechnen ist. Eine Dachform D2,2 ist kombiniert mit bis zur Zahnbasis 1 durchgehenden hinterstellten Seitenflanken 3, die zur Zahnbasis 1 hin mit einer Zahnbasisausrundung 4 enden. Es ist in der Praxis gelungen, eine derartige Zahnform umformtechnisch herzustellen. Alle anderen in der Matrix dargestellten, der Erfindung zuzuordnenden Zahnformen sind ebenfalls umformtechnisch herstellbar.

Nach der Systematik, die der Matrix zugrundeliegt, sind die Zahnformen innerhalb der Zeilen so hintereinandergeordnet, daß die Hinterstellungswinkel von Spalte 1 bis Spalte 9 zunehmen. Dies ergibt sich aus der Wahl bzw. Kombination der geradverzahnten Abschnitte. Da die nach der vorliegenden Erfindung geschützte Lehre auf eine Auswahl bzw. Kombination der geradverzahnten Abschnitte zielt, sind die in Spalte 1, Zeilen b bis e gezeigten Zahnformen, da sie keine Geradverzahnungsabschnitte aufweisen, nicht dem geschützten Erfindungsgegenstand zuzurechnen.

In der Matrix wurden sie aus systematischen Gründen ergänzt, um die unterschiedlichen Dachformen zu verdeutlichen, durch welche sich die Zahnformen der Matrix von Zeile zu Zeile unterscheiden.

Zahnform Za2 unterscheidet sich vom Stand der Technik gemäß Za1 dadurch, daß eine obere Geradverzahnung in Form einer schmalen Leitfläche 5 vorgesehen ist. Demgegenüber besitzt Zahnform Za3 eine breite Leitfläche 6.

Zahnform Za4 unterscheidet sich von den voranstehenden Zahnformen durch eine untere Geradverzahnung in Form einer niedrigen Stützfläche 7.

Bei der Zahnform Za5 sind sowohl eine obere als eine untere Geradverzahnung vorgesehen in Form einer schmalen Leitfläche 5 und einer niedrigen Stützfläche 7.

Zahnform Za6 zeigt die Kombination einer breiten Leitfläche 6 mit einer niedrigen Stützfläche 7.

Zahnform Za7 zeigt lediglich eine untere Geradverzahnung in Form einer hohen Stützfläche 8.

Zahnform Za8 zeigt die Kombination einer hohen Stützfläche 8 mit einer schmalen Leitfläche 5.

Zahnform Za9 zeigt die Kombination einer breiten Leitfläche 6 mit einer hohen Stützfläche 8.

Zu jeder Zahnform in Zeile a ist der Hinterstellungswinkel α entsprechend der jeweiligen zeichnerischen Darstellung oberhalb der Dachform angegeben. Alle Winkelangaben sind beispielhaft. Sie sind für alle Zahnformen in den Zeilen b bis e dieselben, da dieselben Längen- und Breitenverhältnisse herrschen. Wie bereits ausgeführt unterscheiden sich die Zeilen lediglich durch unterschiedliche Dachformen, so daß darauf verzichtet werden kann, auf die einzelnen Zahnformen einzugehen.

In Zeile b ist die Dachform sphärisch, d.h. es handelt sich um zwei konvexe Dachflächen 9, die wie alle anderen Dachformen ebenfalls zusammen eine gerundete Dachspitze bilden. Die Dachformen D2,2 in Zeile a und D9,9 in Zeile b sind symmetrisch; sie eignen sich für Gangräder, die in beiden Richtungen betrieben werden oder für solche, die zum Einsatz für beide Drehrichtungen geeignet sind. Im Gegensatz zur Dachform D2,2 ergibt sich bei Dachform D9,9 eine Linienberührung beim Auftreffen mit einer Gegenverzahnung, wodurch das Einspuren gegenüber Dachform D2,2 erleichtert wird.

In den Zeilen c, d und e sind jeweils asymmetrische Dachformen gezeigt, nämlich in Zeile c eine Dachform D2,9, bei welcher das Einstechen auf der Seite der konvexen Dachfläche 9 erleichtert ist. Wenn das Gegenzahnrad umgekehrt ausgebildet ist, so ergibt sich eine Herstellungsvereinfachung dadurch, daß beide Zahnräder einer Zahnradpaarung jeweils mit einer ebenen Dachfläche auskommen, die mit geringerem Aufwand hergestellt werden kann.

In Zeile d ist eine Dachform in Art eines Pultdachs gezeigt, wobei die Dachschräge als ebene Dachfläche 10 ausgebildet ist. Die zweite Dachfläche 11 erstreckt sich parallel zur Zahnlängsrichtung. In vergleichbarer Weise ist in Zeile e bei einer Pultdachform die schräge Dachfläche 12 konvex ausgebildet. Derartige asymmetrische Pultdachformen kommen nur für Gangräder in Frage, die in einer Richtung drehen. Der Vorteil der Pultdachform liegt darin, daß die Wahrscheinlichkeit eines frontalen Auftreffens während des Einstechens erheblich reduziert ist, da eine Einschaltblockierung nur in einem schmalen Randbereich der Pultdachform vorkommen kann.

Es versteht sich von selbst, daß die in den Zeilen c bis e dargestellten asymmetrischen Dachformen bezüglich der Zahnlängsachse auch umgekehrt gespiegelt ausgebildet sein können. Die Matrix kann im Rahmen der Erfindung noch erweitert werden, indem andere Dachformen gewählt werden, oder indem die geometrischen Verhältnisse in Richtung der Zahnhöhe variiert werden.

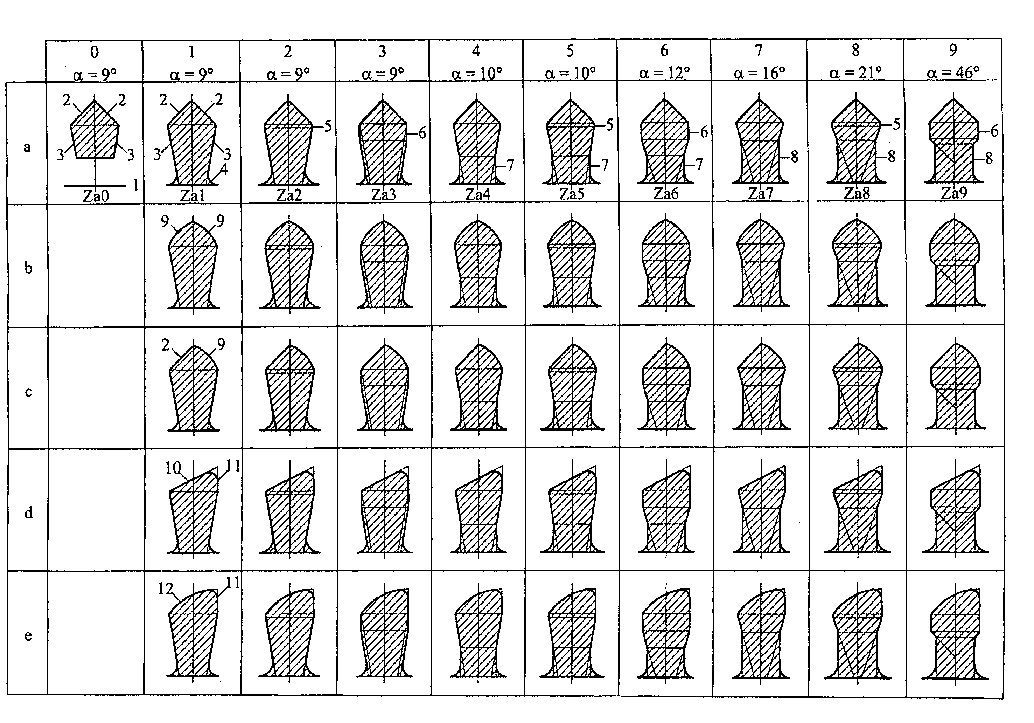

## Patentansprüche

1. Zahn-Querschnittsform eines Zahnes einer Kurzverzahnung, an Zahnrädern in Schaltgetrieben von Kraftfahrzeugen, wobei die Zähne der Kurzverzahnung an einem zylindrischen Abschnitt eines Gangrads oder einer Schaltmuffe ausgebildet sind, dessen Achse mit der Verschiebeachse der Schaltmuffe zusammenfällt, und wobei jeder Zahn unter Ausbildung einer Dachfläche (2) einen abgeschrägten Zahnkopf und zur Zahnbasis (1) hin wenigstens über eine Teilhöhe hinterstellt ausgebildete Seitenflanken (3) aufweist, die mit einer Zahnbasisausrundung (4) enden,
**dadurch gekennzeichnet,**
**daß** alle Zähne oder eine nach einem regelmäßig wechselnden Muster definierte Teilmenge derselben wenigstens eine der beiden, die Gestaltung der Seitenflanken definierenden folgenden Morphologien umfassen:
a) zwischen der Unterkante der Dachfläche des Zahnkopfs und dem hinterstellten Flankenabschnitt (3) ist eine obere Geradverzahnung in Form einer zur Zahnlängsrichtung im wesentlichen parallel verlaufenden Leitfläche (5; 6) mit einer der jeweiligen Belastung der Zahnflanke entsprechenden Breite vorgesehen;
b) zwischen dem hinterstellten Flankenabschnitt und der Zahnbasisausrundung (4) ist eine untere Geradverzahnung in Form einer zur Zahnrichtung im wesentlichen parallel verlaufender Stützfläche (7; 8) mit einer der jeweiligen Belastung der Zahnbasis entsprechenden Höhe vorgesehen.

2. Zahn-Querschnittsform nach Anspruch 1,
**dadurch gekennzeichnet,**
**daß** nur eine obere Geradverzahnung vorgesehen ist und daß der Hinterstellungswinkel bis zu 9 Winkelgrade beträgt.

3. Zahn-Querschnittsform nach Anspruch 1,
**dadurch gekennzeichnet,**
**daß** eine untere Geradverzahnung mit derart niedriger Stützfläche (7) vorgesehen ist, daß der Hinterstellungswinkel 3 bis 12 Winkelgrade beträgt.

4. Zahn-Querschnittsform nach Anspruch 1,
**dadurch gekennzeichnet,**
**daß** eine untere Geradverzahnung mit derart hoher Stützfläche (8) vorgesehen ist, daß der Hinterstellungswinkel 6 bis 60 Winkelgrade beträgt.

5. Zahn-Querschnittsform nach Anspruch 1,
**gekennzeichnet durch**,
Leitflächen (5) der schmalen Art, deren Breite in Richtung Zahnhöhe gemessen weniger als ein 6-tel der darüber befindlichen Höhe des Zahnkopfs beträgt.

6. Zahn-Querschnittsform nach Anspruch 1,
**gekennzeichnet durch**,
Leitflächen (6) der breiten Art, deren Breite in Richtung Zahnhöhe gemessen kleiner ist als das Ganze aber größer als die Hälfte der darüber befindlichen Höhe des Zahnkopfs.

7. Zahn-Querschnittsform nach Anspruch 1,
**gekennzeichnet durch**,
Stützflächen (7) der niedrigen Art, deren Höhe von der Zahnbasis aus gemessen breiter ist als die Leitfläche der breiten Art, aber niedriger als die halbe Höhe des Zahnes, gemessen von der Basis (1) bis zur Unterkante der Dachflächen.

8. Zahn-Querschnittsform nach Anspruch 1,
**gekennzeichnet durch**,
Stützflächen (8) der hohen Art, deren Höhe von der Zahnbasis aus gemessen etwa der halben Zahnhöhe entspricht.

9. Zahn-Querschnittsform nach Anspruch 1,
**dadurch gekennzeichnet,**
**daß** der Zahnkopf symmetrisch oder asymmetrisch ausgebildet ist.

10. Zahn-Querschnittsform nach Anspruch 9,
**dadurch gekennzeichnet,**
**daß** der Zahnkopf aus zwei Dachflächen gebildet ist, die entweder beide als ebene Fläche (2) oder als konvexe Fläche (9) ausgebildet sind oder von denen eine als ebene Fläche, die andere als konvexe Fläche ausgebildet ist.

11. Zahn-Querschnittsform nach Anspruch 10,
**dadurch gekennzeichnet,**
**daß** eine der Dachflächen als ebene, im wesentlichen parallel zur zahnlängsrichtung verlaufende Fläche (11) ausgebildet ist und daß die andere Dachfläche (10; 12) entsprechend schräg verläuft und zusammen mit der ersten Dachfläche eine Dachform in Art eines Pultdachs bildet.

## Claims

1. Cross-sectional shape of a short gearing tooth on toothed wheels of motor vehicle gearboxes, whereby the short gearing teeth are formed on a cylindrical section of a gear wheel or a gear shift sleeve, the axis of this section coinciding with the displacement axis of the gear shift sleeve, and whereby each tooth comprises a tip which is chamfered in a roof-like manner and has one lateral flank (3) which is shaped towards the tooth base (1) whilst forming a tip surface (2), whereby the same ends with a radiused tooth base (4), **characterised in that** all of the teeth or some thereof are defined according to a regularly changing pattern, having at least one of the two following morphologies defining the shape of the lateral flanks:
a) between the lower edge of the roof surface of the tooth tip and the undercut flank section (3) an upper straight gearing in the form of a guide surface (5; 6) extending substantially parallel with the longitudinal tooth direction is envisaged with the relevant width corresponding to the load placed upon the tooth flank;
b) between the undercut flank section and the radiused tooth base (4) a lower straight gearing in the form of a support surface (7; 8) extending substantially parallel with the tooth direction is envisaged with a relevant height corresponding to the load placed upon the tooth base.

2. Tooth cross-sectional shape according to Claim 1, **characterised in that** only one upper straight gearing is envisaged, and **in that** the undercutting angle equals up to 9 angle degrees.

3. Tooth cross-sectional shape according to Claim 1, **characterised in that** a lower straight gearing is envisaged with such a low support surface (7) that the undercutting angle equals 3 to 12 angle degrees.

4. Tooth cross-sectional shape according to Claim 1, **characterised in that** a lower straight gearing is envisaged with such a high support surface (8) that the undercutting angle equals 6 to 60 angle degrees.

5. Tooth cross-sectional shape according to Claim 1, **characterised by** guide surfaces (5) of the narrow type, whose width measured in the direction of the tooth height is less than a sixth of the height of the tooth tip positioned above the same.

6. Tooth cross-sectional shape according to Claim 1, **characterised by** guide surfaces (6) of the wide type, whose width measured in the direction of the tooth height is smaller than the whole, but larger than half of the height of the height of the tooth tip positioned above the same.

7. Tooth cross-sectional shape according to Claim 1, **characterised by** support surfaces (7) of the low type, whose height measured from the tooth base is wider than the guide surface of the wide type, but less than half the height of the tooth measured from the base (1) to the upper edge of the tip surface.

8. Tooth cross-sectional shape according to Claim 1, **characterised by** support surfaces (8) of the high type, whose height measured from the tooth base equals approximately half the tooth height.

9. Tooth cross-sectional shape according to Claim 1, **characterised in that** the tooth head is formed symmetrically or asymmetrically.

10. Tooth cross-sectional shape according to Claim 9, **characterised in that** the tooth tip consists of two tip surfaces which are either both formed as flat surfaces (2) or as convex surfaces (9), or of which one is formed as a flat surface and the other as a convex surface.

11. Tooth cross-sectional shape according to Claim 10, **characterised in that** one of the tip surfaces is formed as a flat surface (11) extending substantially parallel with the longitudinal tooth direction, and **in that** the other tip surface (10; 12) extends correspondingly diagonal and forms a tip shape of the kind of a desk-top tip together with the first tip surface.

## Revendications

1. Profil de dent pour une dent d'une denture basse de pignon de boîte de vitesse de véhicule automobile, les dents de la denture basse étant aménagées sur une portion cylindrique d'un pignon de vitesse ou d'un synchroniseur, dont l'axe coïncide avec l'axe de coulissement du synchroniseur, chaque dent présentant une tête de dent chanfreinée formant un pan de toit (2) et des flancs (3), qui au moins sur une portion de la hauteur, présentent une dépouille en direction du pied de dent (1) et se terminent avec un arrondi de pied de dent (4),
**caractérisé par le fait que**
toutes les dents ou une partie de celles-ci définie selon un modèle qui alterne de manière régulière, au moins une sur deux, comportent au moins une des deux morphologies suivantes, qui définissent la conformation du flanc de dent :
a) entre l'arête inférieure du pan de toit de la tête de dent et la portion de flanc (3) en dépouille est prévue une denture droite supérieure, sous la forme d'une surface de conduite (5 ; 6) essentiellement parallèle à la direction longitudinale de la dent avec une largeur adaptée à la sollicitation du flanc de dent ;
b) entre la portion de flanc (3) en dépouille et l'arrondi de pied de dent (4) est prévue une denture droite inférieure sous la forme d'une surface d'appui (7 ; 8) essentiellement parallèle à la direction de la dent avec une hauteur adaptée à la sollicitation du pied de dent.

2. Profil de dent selon la revendication 1, **caractérisé par le fait qu'**il est prévu seulement une denture droite supérieure et que l'angle de dépouille représente jusqu'à 9 degrés.

3. Profil de dent selon la revendication 1, **caractérisé par le fait qu'**il est prévu une denture droite inférieure avec une surface de contact (7) basse, telle que l'angle de dépouille représente 3 à 12 degrés.

4. Profil de dent selon la revendication 1, **caractérisé par le fait qu'**il est prévu une denture droite inférieure avec une surface de contact haute (8), telle que l'angle de dépouille représente 6 à 60 degrés.

5. Profil de dent selon la revendication 1, **caractérisé par** des surfaces de conduite (5) de type étroit, dont la largeur mesurée dans la direction de la hauteur de la dent est inférieure à un sixième de la hauteur de la tête de dent située au-dessus.

6. Profil de dent selon la revendication 1, **caractérisé par** des surfaces de conduite (5) de type large, dont la largeur mesurée dans la direction de la hauteur de la dent est inférieure à la hauteur totale mais supérieure à la moitié de la hauteur de la tête de dent située au-dessus.

7. Profil de dent selon la revendication 1, **caractérisé par** des surfaces de contact (7) de type bas, dont la hauteur mesurée à partir du pied de dent est plus grande que la surface de conduite de type large mais est inférieure à la demi hauteur de la dent, mesurée du pied de dent (1) à l'arête inférieure des pans de toit.

8. Profil de dent selon la revendication 1, **caractérisé par** des surfaces de contact (7) de type haut, dont la hauteur mesurée à partir du pied de dent correspond sensiblement à la moitié de la hauteur de la dent.

9. Profil de dent selon la revendication 1, **caractérisé par le fait que** la tête de dent est symétrique ou asymétrique.

10. Profil de dent selon la revendication 9, caractérisé le fait que la tête de dent est formée de deux pans de toit qui sont conformés tous les deux soit en surface plane (2), soit en surface convexe (9) ou parmi lesquels l'un est conformé en surface plane et l'autre en surface convexe.

11. Profil de dent selon la revendication 10, caractérisé le fait que l'un des pans de toit est conformé en surface (11) plane essentiellement parallèle à la direction longitudinale de la dent et que l'autre pan de toit (10, 12) présente une inclinaison adaptée et forme avec le premier pan de toit un toit de type toit à une pente.
